# EUROPÄISCHE PATENTSCHRIFT

(11) **EP 2 332 488 B1**
(45) Veröffentlichungstag und Bekanntmachung des Hinweises auf die Patenterteilung: **06.08.2014**
(21) Anmeldenummer: 10193947.8
(22) Anmeldetag: 07.12.2010
(51) Int. Cl.: A61C 7/04

(54) **Verfahren zum Ablösen eines orthodontischen Brackets von der Oberfläche eines Zahns**
Method for releasing an orthodontic bracket from the surface of a tooth
Procédé d'enlèvement d'un bracket orthodontique de la surface d'une dent

(30) Priorität: 11.12.2009 DE 102009058246
(43) Veröffentlichungstag der Anmeldung: 15.06.2011
(73) Patentinhaber: Bernhard Förster GmbH, 75172 Pforzheim (DE)
(72) Erfinder: Förster, Rolf, 75173, Pforzheim (DE)
(74) Vertreter: Twelmeier Mommer & Partner

(56) Entgegenhaltungen:
- WO-A2-01/66031
- WO-A2-2008/142690
- DE-U1- 9 422 346
- US-A1- 2005 272 006
- US-B1- 6 413 088

## Beschreibung

Die Erfindung geht von einem Verfahren mit den im Oberbegriff des Patentanspruchs 1 angegebenen Merkmalen aus. Ein solches Verfahren und eine dafür geeignete Zange sind aus der DE 9422346 U1 sowie der WO 01/66031 A2 bekannt.

Ein orthodontisches Bracket hat üblicherweise eine Basis, eine von der Basis ausgehende okklusale Wand mit wenigstens einem okklusalen Ligaturenflügel, eine von der Basis ausgehende gingivale Wand mit wenigstens einem gingivalen Ligaturenflügel und einen Kanal, welcher sich zwischen der okklusalen Wand und der gingivalen Wand durchgehend in Richtung von mesial nach distal erstreckt. Dieser Kanal wird auch als Slot bezeichnet. Er dient dazu, einen Drahtbogen aufzunehmen, mit welchem Kräfte und Drehmomente zur Korrektur der Stellung eines Zahns mittels des Brackets auf den Zahn übertragen werden können. Zu diesem Zweck wird das Bracket mit seiner Basis auf die Oberfläche des Zahns geklebt. Nach Beendigung der Zahnstellungskorrektur muss das Bracket wieder vom Zahn entfernt werden. Dazu sind besonders angepasste Zangen bekannt.

Die aus der US 3,986,265 bekannte Zange hat zwei Backen mit einander zugewandten, sich verjüngenden und in einer Eingriffskante endenden Fortsätzen. Die Eingriffskanten sind nach Art einer Schneide ausgebildet. Bei geschlossener Zange treffen die beiden Schneiden der Länge nach aufeinander. Zum Lösen eines Brackets von der Oberfläche eines Zahns wird die Zange mit ihren beiden Eingriffskanten an die okklusale und an die gingivale Seite des Brackets angesetzt, und zwar so, dass die Eingriffskanten in die Fuge zwischen der Basis des Brackets und der Oberfläche des Zahns zielen. Dann werden die Backen gegeneinander gedrückt, so dass sie mit der Eingriffskante in die Fuge zwischen der Basis des Brackets und der Oberfläche des Zahns eindringen und auf diese Weise das Bracket fortschreitend von der Zahnoberfläche ablösen. Dabei kann das abgelöste Bracket in den Mund des Patienten fallen und von diesem versehentlich verschluckt werden.

Um das zu verhindern ist es aus der US 4,776,791 bekannt, auf eine der beiden Backen eine Abschirmung zu stecken, welche das Bracket nach dem Ansetzen der Zange an das Bracket abschirmt und nachfolgend das abgelöste Bracket auffängt. Nachteilig dabei ist, dass die Abschirmung beim Ablösen des Brackets hinderlich ist und die Sicht auf das Bracket beeinträchtigt.

Aus der EP 1 790 309 A1 ist eine Zange zum Ablösen eines Brackets von der Oberfläche eines Zahns bekannt, deren Backen nicht spitz zulaufende, sondern abgerundet endende Fortsätze hat, welche zum Ablösen des Brackets nicht in die Fuge zwischen der Basis des Brackets und der Oberfläche des Zahns zielen können, sondern hinter die Ligaturenflügel, in den Raum zwischen der Basis und den Ligaturenflügeln, greifen. Um das Bracket vom Zahn lösen zu können, muss mit der Zange eine Kippbewegung auf das Bracket ausgeübt werden, die dadurch erzeugt wird, dass einer der beiden Backen zusätzlich mit einem abgerundeten Widerlager versehen ist, welches den Backen auf der Zahnoberfläche abstützt und den Fortsatz des Backens, der hinter den Ligaturenflügel greift, beim Schließen der Zange von der Zahnoberfläche entfernt. Dadurch soll es zum Einreißen des in der Fuge zwischen der Basis des Brackets und dem Zahn befindlichen Klebstoffs kommen. Diese Vorgehensweise geht mit einer hohen mechanischen Belastung des Zahns einher und auch hierbei kann das abgelöste Bracket in den Mund fallen und versehentlich verschluckt werden.

Aus der EP 0 655 266 B1 ist ein Verfahren zum Entfernen von keramischen orthodontischen Brackets bekannt, bei dem das orthodontische Bracket mit einer Zange in zwei Teile zerbrochen werden soll. Um das zu übermöglichen, muss ein spezielles Bracket verwendet werden, welches dahingehend abgewandelt ist, dass es einen quer zum Slot verlaufenden Schlitz hat, welcher von der labialen Seite quer durch das Bracket bis zur Basis des Brackets durchgeht. Dieser Schlitz erlaubt es, die beiden durch den Schlitz unterteilten Abschnitte des Brackets gegeneinander zu drücken, bis die Basis unterhalb des Schlitzes bricht, weil das Bracket dort die geringste Wandstärke hat. Für das Durchführen dieses Verfahrens offenbart die EP 0 655 266 B1 eine Zange, deren Backen aus Richtung distal und aus Richtung mesial auf das Bracket einwirken. Damit das Bracket brechen kann, dürfen die Backen nur oberhalb der Basis auf die distale Seite und die mesiale Seite des Brackets einwirken. An den Backen sind deshalb Ausnehmungen vorgesehen, in welche ein distaler Abschnitt und ein mesialer Abschnitt des Brackets von der labialen Seite her eingeführt werden können. Das Ende der Ausnehmungen schlägt an der labialen Seite des Brackets an, bevor die Backen die Basis des Brackets erreichen. Darüber hinaus sind die beiden Backen von ihren Enden her geschlitzt, damit sie über einen im Slot des Brackets angeordneten Drahtbogen hinweggreifen können. Der Drahtbogen muss also zum Ablösen der Brackets nicht entfernt sein. Das macht es möglich, dass die zerbrochenen Brackets nach dem Ablösen noch an dem Drahtbogen hängen bleiben, wenn sie durch eine Ligatur am Drahtbogen gesichert sind. Auch dann ist jedoch das Risiko eines Abfallens in den Mund hinein noch gegeben, weil das in zwei kleinere Teile zerbrochene Bracket durch die Ligatur nicht unbedingt am Drahtbogen gehalten wird. Idealerweise sollten sich beide Teile des zerbrechenden Brackets von der Oberfläche des Zahns lösen. Das kann jedoch nicht gewährleistet werden. Es besteht vielmehr die Gefahr, dass sich beim Zerbrechen des Brackets nur eines der beiden Teile von der Zahnoberfläche gelöst hat und dass das andere Teil danach in einem gesonderten Arbeitsschritt mit einer anderen Zange von der Oberfläche des Zahns gelöst werden muss, was den Ablösevorgang erschwert und zeitraubend macht.

Der vorliegenden Erfindung liegt die Aufgabe zugrunde, ein insbesondere für das Ablösen von keramischen Brackets geeignetes Verfahren zur Verfügung zu stellen, welches die oben beschriebenen Nachteile nicht aufweist und keine Änderung am Bracket erfordert.

Diese Aufgabe wird gelöst durch ein Verfahren mit den im Patentanspruch 1 angegebenen Merkmalen. Eine für das Verfahren besonders geeignete und an das Verfahren angepasste Zange ist Gegenstand des Patentanspruchs 8. Vorteilhafte Weiterbildungen der Erfindung sind Gegenstand der Unteransprüche.

Erfindungsgemäß wird ein orthodontisches Bracket, welches eine Basis, eine von der Basis ausgehende okklusale Wand mit wenigstens einem okklusalen Ligaturenflügel, eine gingivale Wand mit wenigstens einem gingivalen Ligaturenflügel und einen Kanal hat, welcher sich zwischen der okklusalen Wand und der gingivalen Wand durchgehend in Richtung von mesial nach distal erstreckt, von der Oberfläche eines Zahnes abgelöst, in dem eine Zange mit zwei einander gegenüberliegenden Backen, von denen wenigstens einer einen dem gegenüberliegenden Backen zugewandten Fortsatz mit einer gegen den gegenüberliegenden Backen gerichteten Eingriffskante hat, wobei sich der Fortsatz bis zu seiner Eingriffskante verjüngt, an zwei einander gegenüberliegenden Seiten des Brackets, nämlich an dessen mesialer Seite und an dessen distaler Seite, mit seinen beiden Backen in der Weise angesetzt wird, dass die wenigstens eine Eingriffskante in die Fuge zwischen der Zahnoberfläche und der dieser zugewandten Basis des Brackets zielt, und indem der Abstand der beiden Backen der Zange darauffolgend verringert wird, so dass der wenigstens eine sich verjüngende Fortsatz in die Fuge eindringt und dadurch die Basis des Brackets von der Oberfläche des Zahns löst. Zu diesem Zweck haben die beiden Backen der Zange jeweils einen Schlitz. Die beiden Schlitze fluchten miteinander und eine Ebene, welche in der Flucht der beiden Schlitze liegt, schneidet die Eingriffskante des wenigstens einen sich verjüngenden Fortsatzes unter einem rechten Winkel.

Das hat wesentliche Vorteile:
- Das Verfahren eignet sich in Verbindung mit der speziellen Zange zum Ablösen von Brackets zu einem Zeitpunkt, zu welchem der orthodontische Drahtbogen, welcher zum Zwecke der Korrektur einer Fehlstellung von Zähnen durch einen oder mehrere Brackets geführt und mit seinen Enden üblicherweise an Molaren verankert ist, noch nicht entfernt ist, sondern sich noch durch den Slot des abzulösenden Brackets hindurch erstreckt. Die Zange kann mit ihren beiden Backen an die distale Seite und an die mesiale Seite der Basis des Brackets so angesetzt werden, dass ihr wenigstens einer sich verjüngende Fortsatz in die Fuge zwischen der Oberfläche des Zahns und der Basis des Brackets zielt. Dies machen die Schlitze in den Backen des Brackets möglich, mit denen die beiden Backen auf den im Mund noch verankerten orthodontischen Drahtbogen gesteckt werden können.
- Dadurch, dass der wenigstens eine Fortsatz der Zange spitz zuläuft und in einer Eingriffskante endet, mit welcher die Zange so an das Bracket angesetzt werden kann, dass die Eingriffskante in die Fuge zwischen der Oberfläche des Zahns und der Basis des Brackets zielt, kann das Bracket schonend vom Zahn abgelöst werden, schonend sowohl für den Zahn als auch für das Bracket. Insbesondere können keramische Brackets, welche infolge ihrer Sprödigkeit besonders bruchgefährdet sind, von der Zahnoberfläche abgelöst werden, ohne zu zerbrechen. Das hat nicht nur den Vorteil, dass das Bracket wiederverwendet werden kann, sondern hat auch den Vorteil, dass keine Bruchstücke in den Mund fallen, die verschluckt werden könnten.
- Der wenigstens eine Fortsatz, welcher sich am Ende eines Backens befindet, löst das Bracket ab, in dem er wie ein Keil in die Fuge zwischen der Zahnoberfläche und der Basis des Brackets hineingedrückt wird. Das Bracket wird auf diese Weise fortschreitend und unter Vermeidung einer auf der Zahnoberfläche und auf der ihr zugewandten Seite der Bracketbasis auftretenden Spitzenbelastung und dadurch besonders schonend vom Zahn abgelöst.
- Das Verfahren eignet sich für Brackets aller Art, insbesondere für selbstligierende Brackets. Das sind Brackets, bei welchen der im Slot des Brackets liegende Drahtbogen durch einen den Slot überbrückenden Schieber oder Clip gesichert wird, welcher Bestandteil des Brackets ist. Vom Zahn abgelöste selbstligierende Brackets bleiben selbst dann noch am orthodontischen Drahtbogen hängen, wenn dieser schon aus seiner Verankerung an Molaren gelöst wurde.
- Wenn mit der erfindungsgemäßen Zange Brackets abgelöst werden sollen, in deren Slot noch ein orthodontischer Drahtbogen liegt, dann werden die beiden Backen der Zange so an das Bracket angesetzt, dass die in den Backen vorgesehenen Schlitze in den im Bracket vorgesehenen Slot zielen. Ist der orthodontische Drahtbogen bereits entfernt, müssen die Schlitze in den Backen der Zange nicht unbedingt in den im Bracket vorgesehenen Slot zielen, sollten es aber vorzugsweise tun, um unsymmetrische Belastungen des Brackets beim Ablösevorgang nach Möglichkeit zu vermeiden. Vorzugsweise wird das Bracket jedoch vom Zahn abgelöst, solange sich noch ein im Mund verankerter Drahtbogen durch den Slot des Brackets hindurch erstreckt. Damit kann verhindert werden, dass das Bracket unkontrolliert in den Mund des Patienten fällt.

Zweckmäßigerweise wird eine Zange verwendet, bei welcher die beiden Schlitze in den Backen mindestens so breit sind wie der im Bracket vorgesehene Slot. Man kommt dann mit einer einzigen Zange für alle Fälle aus. Die Breite des Slots beträgt heute üblicherweise 0,5 mm, so dass er Drahtbögen bis zu dieser Breite bzw. bis zu einem Durchmesser von 0,5 mm aufnehmen kann. Vorzugsweise sind die Schlitze in den Backen der Zange breiter als der Slot im Bracket. Dann können die Backen der Zange auch dann problemlos an die mesiale Seite und an die distale Seite des Brackets angesetzt und dabei auf den Drahtbogen gesteckt werden, wenn das Bracket eine Angulation aufweist, so dass die mesiale Seite und die distale Seite des Brackets unter einem von 90° verschiedenen Winkel zur Längsrichtung des Slots im Bracket verlaufen. Vorzugsweise sind die Schlitze 1 mm breit.

Vorzugsweise wird eine Zange verwendet, deren wenigstens eine Fortsatz keilförmig ausgebildet ist. Besonders vorteilhaft ist es, wenn die Keilflächen eine Kontur haben, welche der typischen Kontur der Oberfläche des Zahns und der ihr zugewandten Fläche der Basis des Brackets entspricht, auf welche sie einwirken sollen. Grundsätzlich könnte man eine Zange verwenden, bei welcher der wenigstens eine Fortsatz nur an einem der beiden Backen vorgesehen ist. Der Ablösevorgang schreitet dann von der einen distalen oder mesialen Seite des Brackets ausgehend fort. Vorzugsweise wird jedoch eine Zange verwendet, bei der die Fortsätze an beiden Backen vorgesehen sind, vorzugsweise symmetrisch zueinander. Das vereinfacht und beschleunigt den Ablösevorgang.

Die Eingriffskanten der Zange sollen beim Schließen der Zange vorzugsweise nicht aufeinandertreffen. Das ist insbesondere beim Ablösen von keramischen Brackets von Vorteil, weil bei ihnen die Ablösung abrupt erfolgen kann. Geschieht das, können die Eingriffskanten schlagartig aufeinandertreffen, wenn keine Gegenmaßnahmen getroffen sind, die das verhindern. Durch einen zwischen den Backen oder zwischen den Handgriffen der Zange wirksamen, verstellbaren Anschlag, der insbesondere durch eine Stellschraube gebildet sein kann, kann verhindert werden, dass die Eingriffskanten aufeinandertreffen und frühzeitig verschleißen. Die Eingriffskanten stellen jeweils den Scheitel eines keilförmigen Fortsatzes da. Eine Eingriffskante kann mit einem kleinen Radius gerundet oder durch eine schmale ebene Fläche oder Fase an der Spitze eines keilförmigen Fortsatzes abgestumpft sein. Der Kantenradius beziehungsweise die Breite der schmalen ebenen Fläche liegt bevorzug im Bereich von 0,1 mm bis 0,2 mm. Hierdurch könne die Eingriffskanten besonders gut in die Fuge zwischen der lingualen Seite der Basis des Brackets und der Oberfläche des Zahns eindringen, wenn die Zange geschlossen wird. Gleichzeitig sind die Eingriffskanten ausreichend stabil und verschleißfest. Mindestens die keilförmigen Fortsätze mit den Eingriffskanten, insbesondere jedoch die gesamte Zange, besteht vorzugsweise aus einem Instrumentenstahl, insbesondere aus Stahl mit der Werkstoffnummer 1.4197 oder 1.4021 nach der Norm EN10027. Diese Materialauswahl hat den Vorteil, dass die Zange, insbesondere im Bereich der Eingriffskanten, eine hohe Härte und Korrosionsbeständigkeit aufweist.

Ein Ausführungsbeispiel der Erfindung ist in den beigefügten Zeichnungen dargestellt.
- Figur 1: zeigt ein selbstligierendes Bracket mit einem Schieber in seiner Offenstellung in einer Schrägansicht auf die labiale Seite,
- Figur 2: zeigt das Bracket aus Figur 1 in einer Schrägansicht auf die linguale Seite der Basis des Brackets,
- Figur 3: zeigt das Bracket aus Figur 1 in einer Schrägansicht wie in Figur 1, jedoch mit dem Schieber in seiner Schließstellung,
- Figur 4: zeigt eine erfindungsgemäße Zange in einer Seitenansicht mit Blickrichtung parallel zur Achse des Gelenks der Zange,
- Figur 5: zeigt vergrößert das Detail X aus Figur 4,
- Figur 6: zeigt die Zange aus Figur 4 in einer um 90° gedrehten Seitenansicht,
- Figur 7: zeigt vergrößert das Detail Y aus Figur 6,
- Figur 8: zeigt die Zange im Eingriff an einem Bracket, und
- Figur 9: zeigt vergrößert das Detail Z aus Figur 8

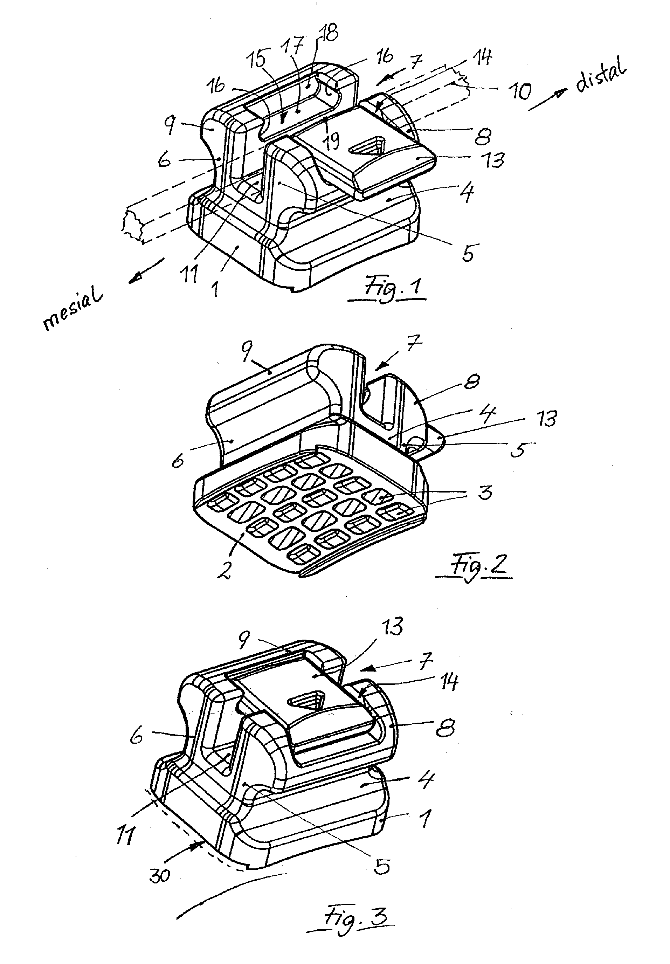

Das in den Figuren 1 bis 3 dargestellte Bracket hat eine gewölbte Basis 1, deren Wölbung der Vorderseite eines Zahnes angenähert ist. Die Basis 1 hat an ihrer Unterseite 2, welche die linguale Seite des Brackets bildet, in Reihe angeordnete Vertiefungen 3, welche hinterschnitten ausgebildet sind. Auf die Unterseite 2 kann ein Klebstoff aufgetragen werden, um das Bracket auf einen Zahn zu kleben. Durch die Verzahnung der hinterschnittenen Vertiefungen 3 mit dem Klebstoff wird eine gute Haftfestigkeit erzielt. In einer jeden Reihe sind die Vertiefungen 3 und mit ihnen die Hinterschnitte übereinstimmend orientiert. Von Reihe zu Reihe sind sie jedoch abwechselnd mal in die eine und mal in die andere Richtung orientiert. Dadurch wird bei einem auf das Bracket wirkenden Schub in Richtung von mesial nach distal dieselbe Haftfestigkeit erzielt wie bei einem Schub von distal nach mesial und bei einem Schub in Richtung okklusal-gingival oder gingival-okklusal ist die Haftfestigkeit unabhängig von der Schubrichtung hoch.

Die Basis 1 geht in einen Sockel 4 über, auf welchem eine gingivale Wand 5 und eine okklusale Wand 6 stehen. Die beiden Wände 5 und 6 verlaufen parallel zueinander und sind durch einen Kanal 7 getrennt, welcher geradlinig durchgehend von distal nach mesial verläuft und nach labial offen ist.

An der gingivalen Wand 5 ist ein in Richtung gingival ragender Ligaturenflügel 8 vorgesehen. An der okklusalen Wand 6 ist ein in Richtung okklusal ragender Ligaturenflügel 9 vorgesehen. Die Ligaturenflügel 8 und 9 können alternativ in jeweils ein Paar Ligaturenflügel unterteilt sein.

Der Kanal 7, welcher auch als Slot bezeichnet wird, dient zur Aufnahme eines Drahtbogens 10, welcher in Figur 1 gestrichelt angedeutet ist, insbesondere einen rechteckigen Querschnitt hat und nicht Bestandteil des Brackets ist. Durch Spannen des Drahtbogens 10 kann auf den Grund 11 des Kanals 7 Druck und auf die Wände 5 und 6 des Brackets ein Drehmoment ausgeübt werden. Zu diesem Zweck ist der lichte Querschnitt des Kanals 7 im wesentlichen rechteckig ausgebildet. Er wird im vorliegenden Fall durch den Grund 11 des Kanals 7 sowie durch die gingivale Wand 5 und durch die okklusale Wand 6 begrenzt.

Eine labiale Ausnehmung 14 in der gingivalen Wand 5 und eine labiale Ausnehmung 15 in der okklusalen Wand 6 nehmen einen hauptsächlich eben ausgebildeten Schieber 13 mit rechteckigem Grundriss auf. Die Ausnehmungen 14 und 15 haben zueinander parallele und zum Grund 11 des Kanals 7 parallele Hinterschnitte 16, welche zusammen mit dem Grund 17 der Ausnehmung 15 und dem Grund 20 der Ausnehmung 14 eine Gleitführung für den Schieber 13 bilden, welche der Schieber 13 in labialer Richtung nicht verlassen kann, weil die Hinterschnitte 16 das verhindern. Die Ausnehmungen 14 und 15 liegen in einer gemeinsamen Flucht. Die Ausnehmung 14 durchquert die gingivale Wand 5, während die Ausnehmung 15 in der okklusalen Wand 6 an einem Anschlag 18 endet.

Der Schieber 13 kann in der Führung 15 bis 17 in Richtung gingival-okklusal verschoben werden zwischen einer Offenstellung, die in den Figuren 1 und 2 dargestellt ist, und einer Schließstellung, die in der Figur 3 dargestellt ist. In der Offenstellung ist der Kanal 7 von labial her in voller Breite offen. Das vordere Ende 19 des Schiebers 13 schließt vorzugsweise mit der den Kanal 7 begrenzenden Oberfläche der gingivalen Wand 5 ab, wie in den Figuren 1 und 3 dargestellt. In der Schließstellung schlägt das vordere Ende 19 des Schiebers 13 am zweiten Anschlag 18 an der okklusalen Wand 6 an, wie es in Figur 3 dargestellt ist. In der Schließstellung überbrückt der Schieber 13 den Kanal 7, so dass ein darin verlaufender Drahtbogen 10 den Kanal 7 in labialer Richtung nicht verlassen kann.

Eine eingehende Beschreibung dieses Brackets findet sich in der DE 10 2006 053 215 B4.

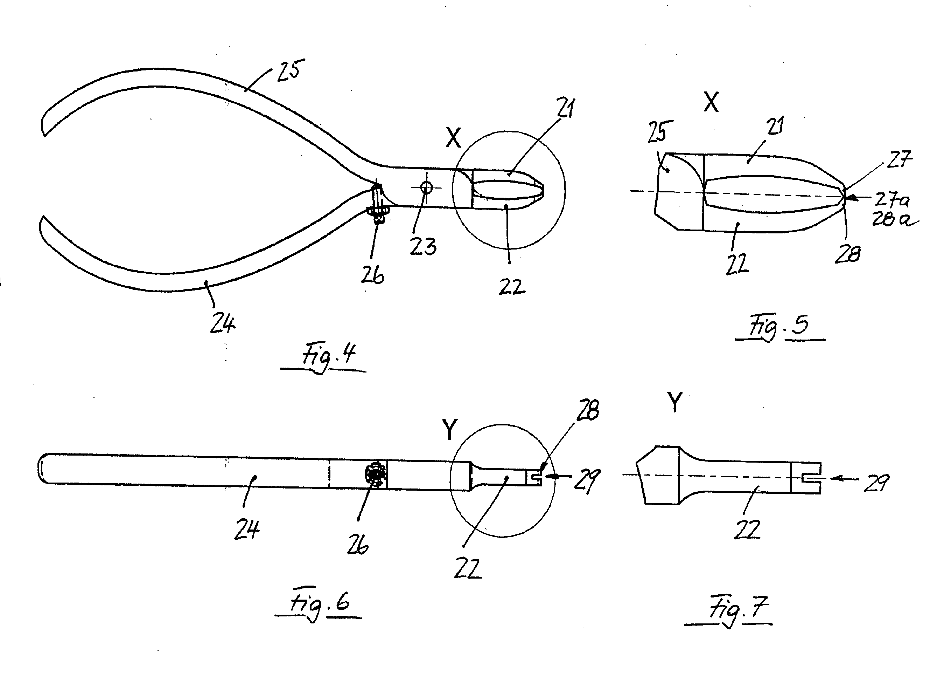

Die in den Figuren 4 bis 7 dargestellten Zange hat zwei im wesentlichen gleich ausgebildete Backen 21 und 22, welche durch ein Gelenk 23 verbunden sind, um dessen Achse sie schwenkbar sind. Der Backen 21 setzt sich in einem Handgriff 24 fort, der Backen 22 setzt sich einen Handgriff 25 fort. In eine Gewindebohrung des Handgriffs 24 ist eine Stellschraube 26 eingedreht, deren vorderes Ende einen verstellbaren Anschlag für den gegenüberliegenden Handgriff 25 bildet. Mit der Stellschraube 26 kann die Schließbewegung der Zange veränderlich begrenzt werden.

Am vorderen Ende der Backen 21 und 22 ist jeweils ein Fortsatz 27 bzw. 28 vorgesehen, welcher sich zu seiner Spitze hin keilförmig verjüngt und in einer Eingriffskante 27a, 28a endet, welche mit einem kleinen Radius R gerundet sein kann und den Scheitel des keilförmigen Fortsatzes 27 bzw. 28 darstellt. Der kleine Radius R liegt bevorzugt zwischen 0,05 mm und 0,15 mm. Die Eingriffskanten 27a, 28a der beiden Backen 21 und 22 sind gegeneinander gerichtet, aber treffen bei geschlossener Zange nicht aufeinander, wenn die Stellschraube 26 so eingestellt wird, dass sie am Hangriff 25 anschlägt, bevor die Eingriffskanten 27a, 28a aufeinandertreffen können.

Die auf der Außenseite der Backen 21 und 22 liegenden Flächen der keilförmigen Fortsätze 27 und 28 liegen in einer gemeinsamen Ebene, wohingegen die auf der Innenseite der Backen 21 und 22 liegenden Flächen der keilförmigen Fortsätze 27 und 28 bei geschlossener Zange einen stumpfen Winkel miteinander einschließen.

Wie die Figuren 6 und 7 zeigen, sind die beiden Backen 21 und 22 ausgehend von ihrem vorderen Ende ein Stück weit geschlitzt. Die Schlitze 29 liegen in einer gemeinsamen Flucht und sind gleich breit. Sie sind durch zwei parallele Flächen begrenzt, welche die Achse des Gelenks 23 unter einem rechten Winkel schneiden. Die Schlitze 29 sind mindestens 0,5 mm, vorzugsweise ca. 1 mm breit. Sie erstrecken sich durch die Fortsätze 27 und 28 hindurch noch ein Stück weit in den daran anschließenden Abschnitt der Backen 21 und 22 hinein, wie ein Vergleich der Figuren 5 und 7 verdeutlicht.

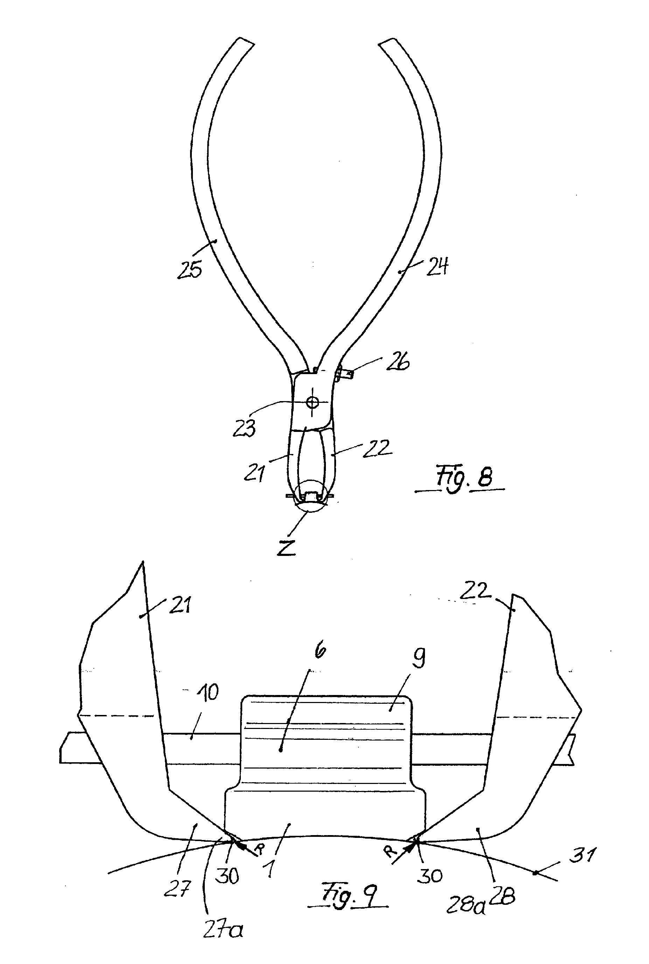

Die Schlitze 29 sind so tief, dass die Backen 21 und 22 mit den Schlitzen 29 über einen im Kanal (Slot) 7 liegenden Drahtbogen 10 gesteckt werden können und dass die vorderen Enden der Backen 21 und 22 dabei die Oberfläche 31 eines Zahnes erreichen können, auf welche das Bracket (Figuren 1 bis 3) geklebt ist, so dass die Eingriffskanten 27a, 28a in die Fuge 30 zwischen der lingualen Seite der Basis 1 des Brackets und der Oberfläche 31 des Zahnes eindringen können, wenn die Zange geschlossen wird, siehe Figuren 8 und 9. Auf diese Weise wird das Bracket von der Oberfläche 31 des Zahns abgelöst und bleibt - mindestens bei geschlossenem Schieber 13 des Brackets, an dem Drahtbogen 10 hängen, so dass es nicht in den Mund fallen kann.

### Bezugszahlen

- 1: Basis
- 4: Sockel
- 5: gingivale Wand
- 6: okklusale Wand
- 7: Kanal (Slot)
- 8: gingivaler Ligaturenflügel
- 9: okklusaler Ligaturenflügel
- 10: Drahtbogen
- 11: Grund
- 13: Schieber
- 15: Führung
- 16: Hinterschnitte / Führung
- 17: Grund / Führung
- 20: Grund
- 21: Backen
- 22: Backen
- 23: Gelenk
- 24: Handgriff
- 25: Handgriff
- 26: Stellschraube
- 27: Fortsatz
- 27a: Eingriffskante
- 28: Fortsatz
- 28a: Eingriffskante
- 29: Schlitze
- 30: Fuge
- 31: Oberfläche eines Zahns

## Patentansprüche

1. Verfahren zum Ablösen eines orthodontischen Brackets, welches eine Basis (1), eine von der Basis (1) ausgehende okklusale Wand (6) mit wenigstens einem okklusalen Ligaturenflügel (9), eine gingivale Wand (5) mit wenigstens einem gingivalen Ligaturenflügel (8) und einen Kanal (7) hat, welcher sich zwischen der okklusalen Wand (6) und der gingivalen Wand (5) durchgehend in Richtung von mesial nach distal erstreckt,
von der Oberfläche (31) eines Zahns
durch
- Ansetzen einer Zange mit zwei einander gegenüberliegenden Backen (21, 22), von denen wenigstens einer an seinem Ende einen dem gegenüberliegenden Backen (21, 22) zugewandten Fortsatz (27, 28) mit einer gegen den gegenüberliegenden Backen (21, 22) gerichteten Eingriffskante (27a, 28a) hat, wobei sich der Fortsatz (27, 28) bis zu seiner Eingriffskante (27a, 28a) verjüngt,
an zwei einander gegenüberliegende Seiten des Brackets derart, dass die wenigstens eine Eingriffskante (27a, 28a) in die Fuge (30) zwischen der Zahnoberfläche und der dieser zugewandten Basis (1) des Brackets zielt, und
- Verringern des Abstandes der beiden Backen (21, 22) der Zange, so dass der wenigstens eine sich verjüngende Fortsatz (27, 28) in die Fuge (30) eindringt und dadurch die Basis (1) des Brackets von der Oberfläche (31) des Zahns löst,
wobei die beiden Backen (21, 22) der Zange in mesialer und distaler Richtung an das Bracket angesetzt werden und zu diesem Zweck beide einen Schlitz (29) haben, dass die beiden Schlitze miteinander fluchten und eine Ebene, welche in der Flucht der beiden Schlitze liegt, die wenigstens eine Eingriffskante (27a, 28a) unter einem rechten Winkel schneidet, **dadurch gekennzeichnet, dass** eine Zange verwendet wird, deren wenigstens einer Fortsatz (27, 28) keilförmig ausgebildet ist.

2. Verfahren nach Anspruch 1, **dadurch gekennzeichnet, dass** das Bracket vom Zahn abgelöst wird, während sich durch den Kanal (7) des Brackets hindurch noch ein Drahtbogen (10) erstreckt.

3. Verfahren nach Anspruch 1 oder 2, **dadurch gekennzeichnet, dass** eine Zange verwendet wird, in welcher die beiden Schlitze (29) mindestens so breit sind wie der im Bracket vorgesehene Kanal (7), vorzugsweise doppelt breit wie der Kanal (7).

4. Verfahren nach einem der vorstehenden Ansprüche, **dadurch gekennzeichnet, dass** eine Zange verwendet wird, bei welcher die beiden Eingriffskanten (27a, 28a) gehindert sind, beim Schließen der Zange aufeinanderzutreffen.

5. Die Anwendung des Verfahrens nach einem der vorstehenden Ansprüche auf keramische Brackets.

6. Die Anwendung des Verfahrens nach einem der vorstehenden Ansprüche auf selbstligierende Brackets.

7. Zange zum Ablösen eines orthodontischen Brackets, welches eine Basis (1), eine von der Basis (1) ausgehende okklusale Wand (6) mit wenigstens einem okklusalen Ligaturenflügel (9), eine gingivale Wand (5) mit wenigstens einem gingivalen Ligaturenflügel (8) und einen Kanal (7) hat, welcher sich zwischen der okklusalen Wand (6) und der gingivalen Wand (5) durchgehend in Richtung von mesial nach distal erstreckt und einen Drahtbogen (10) aufgenommen hat, welcher sich durch den Kanal (7) hindurch und über dessen beide Enden hinaus erstreckt, von der Oberfläche eines Zahns,mit zwei einander gegenüberliegenden, durch ein Gelenk (23) miteinander verbundenen Backen (21, 22), von denen wenigstens einer an seinem Ende einen dem gegenüberliegenden Backen (21, 22) zugewandten Fortsatz (27, 28) mit einer gegen den gegenüberliegenden Backen (21, 22) gerichteten Eingriffskante (27a, 28a) hat, wobei sich der Fortsatz (27, 28) bis zu seiner Eingriffskante (27a, 28a) verjüngt, wobei die beiden Backen (21, 22) einschließlich des wenigstens einen Fortsatzes (27, 28) jeweils einen Schlitz (29) haben, welcher vom Ende des Backens (21, 22) ausgeht, dass die beiden Schlitze (29), miteinander fluchten und dass eine Ebene, welche in der Flucht der beiden Schlitze (29) liegt, die Achse des Gelenks (23) der Zange unter einem rechten Winkel schneidet, **dadurch gekennzeichnet, dass** die Fortsätze (27, 28) in parallel zum Schlitz (29) gelegten Schnitten keilförmig ausgebildet sind..

8. Zange nach Anspruch 7, **dadurch gekennzeichnet, dass** die beiden Schlitze (29) gleich breit sind.

9. Zange nach einem der Ansprüche 7 oder 8, **dadurch gekennzeichnet, dass** beide Backen (21, 22) an ihrem Ende einen Fortsatz (27, 28) haben und die beiden Fortsätze (27, 28) gegeneinander gerichtet sind.

10. Zange nach Anspruch 9, **dadurch gekennzeichnet, dass** die Eingriffskanten (27a, 28a) der beiden Fortsätze (27, 28) durch einen zwischen den Backen (21, 22) oder Handgriffen (24, 25) der Zange wirksamen Anschlag gehindert sind, dass sie beim Schließen der Zange aufeinandertreffen.

11. Zangen nach Anspruch 9 oder 10, **dadurch gekennzeichnet, dass** der Anschlag durch eine Stellschraube (26) gebildet wird.

12. Zange nach einem der Ansprüche 7 bis 11, **dadurch gekennzeichnet, dass** die beiden Backen (21, 22) gleich oder spiegelbildlich gleich ausgebildet sind.

13. Zange nach einem der Ansprüche 7 bis 12, **dadurch gekennzeichnet, dass** eine der Eingriffskanten mit einem kleinen Radius gerundet oder durch eine schmale ebene Fläche abgestumpft ist.

## Claims

1. A method for removing an orthodontic bracket comprising a base (1), an occlusal wall (6) extending away from the base (1) and comprising at least one occlusal ligature wing (9), a gingival wall (5) comprising at least one gingival ligature wing (8) and a channel (7) which extends continuously between the occlusal wall (6) and the gingival wall (5) in the mesial-to-distal direction,
from the surface (31) of a tooth
by
- placing a pair of pliers - which comprise two jaws (21, 22) facing each other, at least one of which has an extension (27, 28) on the end thereof which faces the opposite jaw (21, 22) and comprises an engagement edge (27a, 28a) directed toward the opposite jaw (21, 22), the extension (27, 28) tapering toward the engagement edge (27a, 28a) thereof -
at two opposite sides of the bracket in such a manner that the at least one engagement edge (27a, 28a) extends into the gap (30) between the tooth surface and the base (1) of the bracket facing the tooth surface, and
- reducing the distance between the two jaws (21, 22) of the pliers, thereby enabling the at least one tapering extension (27, 28) to enter the gap (30) and thereby remove the base (1) of the bracket from the surface (31) of the tooth,
wherein the two jaws (21, 22) of the pliers are placed on the bracket in the mesial direction and in the distal direction and both comprise a slot (29) for this purpose and the two slots are aligned with one another, and a plane that is aligned with the two slots intersects the at least one engagement edge (27a, 28a) at a right angle,
**characterized in that** a pair of pliers is used, the at least one extension (27, 28) of which is wedge-shaped.

2. The method according to claim 1, **characterized in that** the bracket is removed from the tooth while an archwire (10) still extends through the channel (7) of the bracket.

3. The method according to claim 1 or 2, **characterized in that** a pair of pliers is used, in which the two slots (29) are at least as wide as the channel (7) provided in the bracket, preferably being twice as wide as the channel (7).

4. The method according to any of the preceding claims, **characterized in that** a pair of pliers is used, the two engagement edges (27a, 28a) of which are prevented from coming into contact with one another when the pliers are closed.

5. The method according to any of the preceding claims applied to ceramic brackets.

6. The method according to any of the preceding claims applied to self-ligating brackets.

7. A pair of pliers for removing an orthodontic bracket
which comprises a base (1), an occlusal wall (6) extending away from the base (1) and comprising at least one occlusal ligature wing (9), a gingival wall (5) comprising at least one gingival ligature wing (8) and a channel (7) which extends continuously between the occlusal wall (6) and the gingival wall (5) in the mesial-to-distal direction and accommodates an archwire (10) which extends through the channel (7) and beyond the two ends thereof,
from the surface of a tooth,
the pair of pliers comprising two jaws (21, 22) facing each other, the jaws (21, 22) being joined to one another by a joint (23) and at least one of which has an extension (27, 28) at the end thereof which faces the opposite jaw (21, 22) and comprises an engagement edge (27a, 28a) directed toward the opposite jaw (21, 22), the extension (27, 28) tapering up to the engagement edge (27a, 28a) thereof,
wherein the two jaws (21, 22), inclusive of their at least one extension (27, 28), each have a slot (29) which extends from the end of the jaw (21, 22), the two slots (29) are aligned to each other, and a plane that is aligned with the two slots (29) intersects the axis of the joint (23) of the pliers at a right angle, **characterized in that** the extensions (27, 28) are wedge-shaped in sections placed parallel to the slots (29).

8. The pliers according to claim 7, **characterized in that** the two slots (29) have the same width.

9. The pliers according to any of claims 7 or 8, **characterized in that** both jaws (21, 22) have an extension (27, 28) at the end thereof, and the two extensions (27, 28) are directed toward each another.

10. The pliers according to claim 9, **characterized in that** - when the pliers are closed - the engagement edges (27a, 28a) of the two extensions (27, 28) are prevented from coming into contact with each another by a stop that acts between the jaws (21, 22) or between handles (24, 25) of the pliers.

11. The pliers according to claim 9 or 10, **characterized in that** the stop is formed by an adjusting screw (26).

12. The pliers according to any of the claims 7 to 11, **characterized in that** the two jaws (21, 22) are identical or are designed as mirror images of each other.

13. The pliers according to any of the claims 7 to 12, **characterized in that** one of the engagement edges is rounded by a small radius or is blunted by a narrow surface.

## Revendications

1. Procédé pour le détachement d'un crochet orthodontique possédant une base (1), une paroi occlusale (6) partant de la base (1), avec au moins une ailette de ligature occlusale (9), une paroi gingivale (5) avec au moins une ailette de ligature gingivale (8) et un canal (7) s'étendant en continu entre la paroi occlusale (6) et la paroi gingivale (5) dans la direction mésiale à distale,
à partir de la surface (31) d'une dent
par
- application d'une pince avec deux mâchoires opposées (21, 22), parmi lesquelles au moins l'une possède à son extrémité un prolongement (27, 28) tourné vers la mâchoire opposée (21, 22), avec un bord d'enclenchement (27a, 28a) orienté contre la mâchoire opposée (21, 22), le prolongement (27, 28) s'affinant jusqu'à son bord d'enclenchement (27a, 28a),
de deux côtés opposés du crochet, de sorte que l'au moins un bord d'enclenchement (27a, 28a) vise le joint (30) entre la surface de la dent et la base (1) du crochet tournée vers celle-ci, et
- réduction de l'écart entre les deux mâchoires (21, 22) de la pince, de manière à ce que l'au moins un prolongement (27, 28) effilé s'insère dans le joint (30) et détache ainsi la base (1) du crochet de la surface (31) de la dent,
dans lequel les deux mâchoires (21, 22) de la pince sont appliquées sur le crochet dans la direction mésiale et distale et possèdent toutes deux une fente (29) à cette fin, les deux fentes étant alignées entre elles, et un plan situé dans l'alignement des deux fentes, coupant l'au moins un bord d'enclenchement (27a, 28a) selon un angle droit, **caractérisé en ce que** l'au moins un prolongement (27, 28) de la pince utilisée est conçu en forme de coin.

2. Procédé selon la revendication 1, **caractérisé en ce que** le crochet est détaché de la dent alors qu'un fil en forme d'arc (10) s'étend encore à travers le canal (7) du crochet.

3. Procédé selon la revendication 1 ou 2, **caractérisé en ce que** dans la pince utilisée, les deux fentes (29) sont au moins aussi larges que le canal (7) prévu dans le crochet, de préférence deux fois plus larges que le canal (7).

4. Procédé selon l'une des revendications précédentes, **caractérisé en ce que** dans la pince utilisée, les deux bords d'enclenchement (27a, 28a) ne se heurtent pas lors de la fermeture de la pince.

5. Application du procédé selon l'une des revendications précédentes à un crochet céramique.

6. Application du procédé selon l'une des revendications précédentes à un crochet auto-ligaturant.

7. Pince pour le détachement d'un crochet orthodontique possédant une base (1), une paroi occlusale (6) partant de la base (1), avec au moins une ailette de ligature occlusale (9), une paroi gingivale (5) avec au moins une ailette de ligature gingivale (8) et un canal (7) s'étendant en continu entre la paroi occlusale (6) et la paroi gingivale (5) dans la direction mésiale à distale et recevant un fil en forme d'arc (10), lequel s'étend à travers le canal (7) et au-delà des deux extrémités de celui-ci, à partir de la surface d'une dent, avec deux mâchoires (21, 22) reliées entre elles par une articulation (23), parmi lesquelles au moins l'une possède à son extrémité un prolongement (27, 28) tourné vers la mâchoire opposée (21, 22), avec un bord d'enclenchement (27a, 28a) orienté contre la mâchoire opposée (21, 22), dans laquelle le prolongement (27, 28) s'affine jusqu'à son bord d'enclenchement (27a, 28a), dans laquelle les deux mâchoires (21, 22) y compris l'au moins un prolongement (27, 28) possèdent respectivement une fente (29) partant de l'extrémité de la mâchoire (21, 22), les deux fentes (29) étant alignées entre elles, et un plan situé dans l'alignement des deux fentes (29) coupe l'axe de l'articulation (23) de la pince selon un angle droit, **caractérisée en ce que** les prolongements (27, 28) sont conçus en forme de coin, par tranches disposées par à la fente (29).

8. Pince selon la revendication 7, **caractérisée en ce que** les deux fentes (29) sont de la même largeur.

9. Pince selon l'une des revendications 7 ou 8, **caractérisée en ce que** les deux mâchoires (21, 22) possèdent un prolongement (27, 28) à leur extrémité, et les deux prolongements (27, 28) sont orientés l'un vers l'autre.

10. Pince selon la revendication 9, **caractérisée en ce que** les bords d'enclenchement (27a, 28a) des deux prolongements (27, 28) ne peuvent pas se heurter lors de la fermeture de la pince, du fait d'une butée agissant entre les mâchoires (21, 22) ou entre des poignées (24, 25) de la pince.

11. Pince selon la revendication 9 ou 10, **caractérisée en ce que** la butée est formée par une vis de réglage (26).

12. Pince selon l'une des revendications 7 à 11, **caractérisée en ce que** les deux mâchoires (21, 22) sont conçues identiques ou symétriques.

13. Pince selon l'une des revendications 7 à 12, **caractérisée en ce que** l'un des bord d'enclenchement est arrondi avec un petit rayon ou tronqué par une surface plane étroite.
